# EUROPÄISCHE PATENTANMELDUNG

(11) **EP 0 547 376 A2**
(43) Veröffentlichungstag der Anmeldung: **23.06.1993**
(21) Anmeldenummer: 92119427.0
(22) Anmeldetag: 13.11.1992
(51) Int. Cl.: B62D 7/14

(54) **Elektrohydraulische Stelleinrichtung zum Betätigen der Hinterradlenkung eines Kraftfahrzeuges**

(30) Priorität: 16.12.1991 DE 4141406
(71) Anmelder: ROBERT BOSCH GMBH, 70442 Stuttgart (DE)
(72) Erfinder: Pfeffer, Peter, Dipl.-Ing., W-7128 Lauffen/N. (DE); Bischof, Hubert, Dr. Dr. Ing., W-7143 Vaihingen/Enz (DE)

(57) **Zusammenfassung**

Es wird eine elektrohydraulische Stelleinrichtung (10) zum Betätigen der Hinterrad-Lenkung eines Kraftfahrzeugs vorgeschlagen, die bei kostengünstiger Bauweise durch Verwendung von Großserienteilen hohe Forderungen hinsichtlich Zuverlässigkeit und Sicherheit erfüllt. Die Stelleinrichtung (10) weist eine elektrohydraulische Servolenkung (17) auf, deren zugeordneter hydraulischer Stellzylinder (29) durch ein in dem Hydraulikkreis (22) liegendes Sicherheits-Schaltventil (45) blockierbar ist und deren Lenkwelle (19) am mechanischen Eingang des hydraulischen Steuerventils (18) von einer elektromagnetisch lüftbaren Federdruckbremse (39) arretierbar ist. Im Sicherheitsfall können die Blockiereinrichtungen (39, 45) einzeln oder gemeinsam die Spurstange (14) und damit die Hinterräder (11) in der zuletzt eingenommenen Stellung festsetzen.

## Beschreibung

### Stand der Technik

Die Erfindung geht aus von einer elektrohydraulischen Stelleinrichtung zum Betätigen der Hinterrad-Lenkung eines Kraftfahrzeuges nach der im Oberbegriff des Anspruchs 1 näher angegebenen Gattung.

Es ist schon eine solche elektrohydraulische Stelleinrichtung zum Betätigen der Hinterrad-Lenkung eines Kraftfahrzeuges aus der DE 35 20 225 A1 bekannt, bei der die Hinterrad-Lenkung in Zusammenhang mit einer Vierradlenkung dargestellt ist. In der Stelleinrichtung der Hinterrad-Lenkung ist zur Betätigung einer Spurstange eine elektrohydraulische Servolenkung vorgesehen, deren hydraulisches Steuerventil als mechanischen Ausgang eine Ritzelwelle aufweist, die in einen Zahnstangenabschnitt der Spurstange greift. Zur Unterstützung der Lenkbewegung steuert das in einen hydraulischen Kreis geschaltete Steuerventil einen doppeltwirkenden Stellzylinder, der ebenfalls auf die Spurstange einwirkt. Von Nachteil bei dieser elektrohydraulischen Hinterradlenkung ist nun, daß die Stelleinrichtung keine Mittel aufweist, um im Sicherheitsfalle bei Fehlfunktionen irgendwelcher Bauelemente für eine Abschaltung bzw. Blockierung der Hinterrad-Lenkung zu sorgen. Zur Übertragung der Steuerbewegung von einem elektrisch angetriebenen Schrittmotor auf eine Lenkwelle am Eingang des Steuerventils wird ein Kegelradgetriebe verwendet, dessen Ritzel gleich groß sind und somit keine Selbsthemmung aufweisen. Auch der Aufwand für den Schrittmotor ist relativ hoch.

### Vorteile der Erfindung

Die erfindungsgemäße elektroydraulische Stelleinrichtung zum Betätigen der Hinterrad-Lenkung eines Kraftfahrzeuges mit den kennzeichnenden Merkmalen des Anspruchs 1 hat demgegenüber den Vorteil, daß sie die hohen Anforderungen bezüglich Sicherheit und Zuverlässigkeit bei niedrigen Kosten erfüllt. Vor allem kann die elektrohydraulische Stelleinrichtung den hohen sicherheitstechnischen Anforderungen an Fahrzeugquerführungen genügen. Dabei lässt sich die Stelleinrichtung sehr kostengünstig realisieren, da billige und erprobte Teile aus der Großserie, wie zum Beispiel Servolenkung, Pumpe, Tank und Elektromotor verwendet werden können. Ebenso lassen sich im Hydraulikkreis Komponenten einsetzen, die funktional und sicherheitstechnisch erprobt sind und eine allgemeine Zulassung haben. Zudem ermöglicht diese Stelleinrichtung einen sehr modularen Aufbau. Ferner lassen sich bei dieser Stelleinrichtung Bauelemente verwenden, wie sie bereits an einer Vorderachslenkung eingesetzt werden, was insbesondere für die Servolenkung und Lenkwinkelsensoren gilt, so daß eine kostengünstige Bauweise durch hohe Stückzahlen möglich wird. Vorteilhaft arbeitet die Blockiereinrichtung nicht elektrisch, also mechanisch oder hydraulisch, um die Lenkung in ihrer zuletzt eingenommenen Stellung festzusetzen.

Durch die in den Unteransprüchen aufgeführten Maßnahmen sind vorteilhafte Weiterbildungen und Verbesserungen der elektrohydraulischen Stelleinrichtung für die Hinterrad-Lenkung möglich. So ist es besonders vorteilhaft, wenn die Blockiereinrichtung gemäß Anspruch 2 hydraulisch ausgebildet wird.

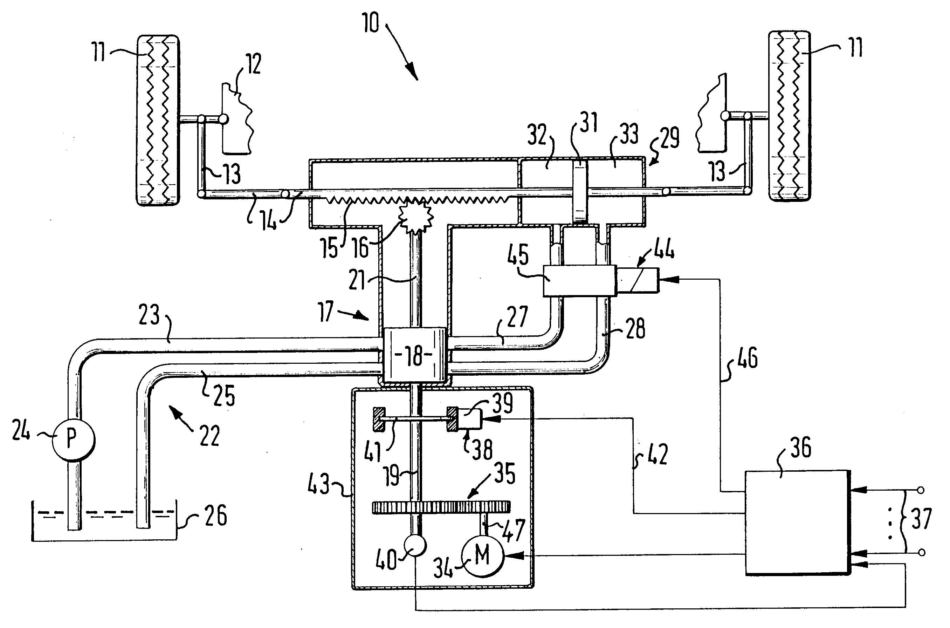

Dadurch lässt sich ein Absperren der Arbeitsräume im Stellzylinder auf einfache Weise erreichen, wenn in der elektrohydraulischen Stelleinrichtung ein Fehlerfall auftritt. Ferner ist es besonders zweckmäßig, wenn die Blockiereinrichtung gemäß Anspruch 3 mechanisch ausgebildet wird. Dabei wirkt es sich besonders günstig aus, wenn die erforderliche Bremse auf dem kleinen Momentenniveau der Lenkwelle oder der Motorwelle eingesetzt werden kann. Weitere vorteilhafte Ausgestaltungen ergeben sich aus den übrigen Ansprüchen, der Beschreibung sowie der Zeichnung.

### Zeichnung

Ein Ausführungsbeispiel der Erfindung ist in der Zeichnung dargestellt und in der nachfolgenden Beschreibung näher erläutert. Es zeigt die einzige Figur ein Ausführungsbeispiel der elektrohydraulischen Stelleinrichtung zum Betätigen der Hinterrad-Lenkung eines Kraftfahrzeuges in vereinfachter Darstellung.

### Beschreibung des Ausführungsbeispiels

Die Figur zeigt in schematischer Darstellung eine elektrohydraulische Stelleinrichtung 10 zum Betätigen der Hinterrad-Lenkung eines Kraftfahrzeuges, von deren Hinterrad-Lenkmechanismus zum Einschlagen eines rechten und linken Hinterrades 11, die jeweils an einem Fahrzeugkörper 12 gelenkig aufgehängt sind, die jeweils zugeordneten Lenkhebel 13 und eine mit diesen verbundene Spurstange dargestellt sind. Die Spurstange 14 ist auf dem Fahrzeugkörper in dessen Querrichtung verschiebbar abgestützt und gelenkig so verbunden, daß die Hinterräder 11 in Abhängigkeit von einer Akialverschiebung der Spurstange 14 eingeschlagen werden können. Auf der Spurstange 14 ist eine Zahnstange 15 ausgebildet, mit der ein Ritzel 16 kämmt.

Zum Einschlagen der Hinterräder 11 wird eine elektrohydraulische Servolenkung 17 verwendet, wie sie auch serienmäßig zur Vorderachslenkung bei Kraftfahrzeugen eingesetzt wird. Die Servolenkung 17 weist ein hydraulisches Steuerventil 18 auf, dessen mechanischer Eingang eine Lenkwelle 19 bildet und dessen mechanischer Ausgang eine Ritzelwelle 21 ist, auf dem das Ritzel 16 befestigt ist. Das auf dem Fahrzeugkörper 12 bzw. dem Stellzylinder 29 fest angeordnete Steuerventil 18 ist in einen Hydraulikkreis 22 geschaltet, wozu es über eine Zuführleitung 23 mit einer Pumpe 24 und über eine Rücklaufleitung 25 mit einem Tank 26 verbunden ist. Ferner steht das Steuerventil 18 über zwei Arbeitsleitungen 27, 28 mit einem doppeltwirkenden Stellzylinder 29 in Verbindung, der ebenfalls einen Teil der Servolenkung 17 bildet. Der Stellzylinder 29 wird von der Spurstange 14 durchdrungen, auf welcher ein Kolben 31 befestigt ist. Der Kolben 31 trennt im Stellzylinder 29 zwei Druckräume 32 und 33 voneinander, die jeweils mit einer der Arbeitsleitungen 27 bzw. 28 verbunden sind.

In der Servolenkung 17 wird die Lenksäule 19 von einem Elektromotor 34 über ein Reduktionsgetriebe 35 angetrieben. Der Elektromotor 34 wird von einem elektronischen Steuergerät 36 angesteuert, an dem mehrere Signaleingänge 37 ausgebildet sind. Die Drehlage der Lenkwelle 19 wird von einem Winkelsensor 40 erfasst, der seine elektrischen Signale ebenfalls an das elektronische Steuergerät 36 meldet. Es kann aber auch anstelle dieser Drehlage ganz allgemein die Lage der Spurstange 14 erfaßt werden durch einen Winkelsensor auf einer Motorwelle 47 oder von einem Wegsensor an der Spurstange. Das Reduktionsgetriebe 35 ist hier nicht selbsthemmend ausgebildet; der Elektromotor 34 kann ein permanent oder elektrisch erregter Elektromotor mit mechanischer oder elektronischer Kommutierung sein.

In der Stelleinrichtung 10 ist eine erste Blockiereinrichtung 38 vorgesehen, die mechanisch arbeitet. Zu diesem Zweck ist zwischen dem Steuerventil 18 und dem Reduktionsgetriebe 35 eine Federdruckbremse 39 angeordnet, deren eigentliche Bremsscheibe 41 fest auf der Lenkwelle 19 sitzt. Diese Federdruckbremse 39 weist eine elektromagnetisch betätigbare Lüftungseinrichtung auf und steht zu diesem Zweck über eine Steuerleitung 42 mit dem elektronischen Steuergerät 36 in Verbindung. Die Federdruckbremse 39, das Reduktionsgetriebe 35 und der Elektromotor 34 sind zu einem Kompaktaggregat 43 zusammengefasst, das auf die Lenkwelle 19 aufgebaut ist und in geeigneter Weise mit dem Fahrzeugkörper 12 bzw. der Lenkwelle 19 mechanisch gekuppelt ist.

Ferner ist eine zweite Blockiereinrichtung 44 in der Stelleinrichtung 10 vorgesehen, welche hydraulisch arbeitet. Zu diesem Zweck ist ein Schaltventil 45, das als 4-Wege-2-Stellungsventil ausgebildet sein kann, in die beiden Arbeitsleitungen 27, 28 geschaltet. Das Schaltventil 45 ist von einem Elektromagneten betätigbar, der über eine Steuerleitung 46 mit dem Steuergerät 36 in Verbindung steht.

Die Wirkungsweise der Stelleinrichtung 10 wird wie folgt erläutert, wobei die grundsätzliche Funktion der Hinterradlenkung mit Hilfe der elektrohydraulischen Servolenkung 17 als an sich bekannt vorausgesetzt werden kann.

Wenn das elektronische Steuergerät 36 den Elektromotor 34 ansteuert, so übt dieser über das Reduktionsgetriebe 35 auf die Lenkwelle 19 ein Drehmoment aus, das über die Ritzelwelle 21 und das Ritzel 16 auf die Zahnstange 15 einwirkt, um die Hinterräder 11 einzuschlagen. Dabei wird das Steuerventil 18 in Abhängigkeit von dem auf die Ritzelwelle 21 ausgeübten Drehmoment betätigt, wobei es den Hydraulikdruck von der Pumpe 14 über die Zuführleitung 23 entsprechend der Richtung des auf die Ritzelwelle 21 wirkenden Drehmoments an eine der beiden Druckkammern 32 bzw. 33 anlegt, während Druckmittel von der jeweils anderen Druckkammer 33 bzw. 32 über das Steuerventil 18 und die Rückführleitung 22 zum Tank 26 abgeführt wird. Wenn somit die Spurstange 14 vom Elektromotor 34 über die mechanische Wirkverbindung zum Ritzel 16 in axialer Richtung verschoben wird, dann unterstützt der in einer der beiden Druckkammern 32 bzw. 33 wirkende Hydraulikdruck diese Bewegung der Spurstange mittels des Kolbens 31.

Im Normalbetrieb der Hinterradlenkung sind dabei die beiden Blockiereinrichtungen 38 und 44 unwirksam. Die erste Blockiereinrichtung 38 wird vom Steuergerät 36 so angesteuert, daß ihre Federdruckbremse 39 elektromagnetisch gelüftet ist und somit deren Bremsscheibe 41 sich frei drehen kann.

In der zweiten Blockiereinrichtung 44 wird das Schaltventil 45 vom elektronischen Steuergeät 36 so angesteuert, daß es elektromagnetisch in eine Offen-Stellung geschaltet wird, in der die beiden Arbeitsleitungen 27 und 28 zwischen dem Steuerventil 18 und dem Stellzylinder 29 voll aufgesteuert sind, so daß die hydraulische Lenkkraftunterstützung nicht beeinträchtigt wird.

Im Sicherheitsfall werden die beiden Blockiereinrichtungen 38, 44 in der Hinterradlenkung vom elektronischen Steuergerät 36 aktiviert. Im Gefahrenfall fällt das Ansteuersignal über die Steuerleitung 42 weg und die Federdruckbremse 39 arretiert über die Bremsscheibe 41 die Lenksäule 19 und damit die Lenkung, bzw. bei entsprechender Anordnung die Motorwelle 47. Diese mechanisch arbeitende Blockiereinrichtung 38 hat den Vorteil, daß sie auf dem kleinen Momentenniveau der Lenkwelle 19 oder dem noch kleineren des Elektromotors eingesetzt werden kann. Weiterhin entfällt im Gefahrensignal das Ansteuersignal über die Steuerleitung 46 zum magnetisch geöffneten Schaltventil 45, wodurch dessen federzentriertes Steuerglied in eine Sperrstellung verschoben wird und dabei den doppeltwirkenden Stellzylinder 29 hydraulisch blockiert. Auch hierdurch wird die Hinterradlenkung in der zuletzt eingenommenen Stellung festgesetzt. Die zweite, hydraulisch arbeitende Blockiereinrichtung 44 kann dabei vollkommen unabhängig von der ersten Blockiereinrichtung wirksam werden.

Mit der Stelleinrichtung 10 kann somit ein äußerst kostengünstiges Stellsystem für die Hinterradlenkung eines Kraftfahrzeuges erreicht werden, wobei zugleich hohe sicherheitstechnische Anforderungen erfüllbar sind. Dabei lassen sich billige und erprobte Teile aus der Großserie, wie zum Beispiel die Servolenkung, die Pumpe, der Tank, der Elektromotor verwenden, wobei auch im Hydraulikkreis Komponenten einsetzbar sind, die funktional und sicherheitstechnisch erprobt sind.

Selbstverständlich ist es möglich, an der gezeigten Stelleinrichtung Änderungen vorzunehmen, ohne vom Gedanken der Erfindung abzuweichen. So lässt sich anstelle des gezeigten, nicht selbsthemmenden Reduktionsgetriebes 35 auch ein anderes Reduktionsgetriebe verwenden, das selbsthemmend ist, zum Beispiel ein Schneckengetriebe. Bei Verwendung eines selbsthemmenden Reduktionsgetriebes kann unter Umständen auf die erste Blockiereinrichtung 38 verzichtet werden. Natürlich können die drei aufgezeigten Arten von Blockiereinrichtungen einzeln oder in Kombination miteinander verwendet werden, wobei die dargestellte Lösung besonders vorteilhaft ist. Ferner ist es möglich, anstelle des an der Lenkwelle 19 angeordneten Winkelsensors 40 je nach geforderter Stellgenauigkeit auch einen Wegsensor zu verwenden, der direkt an der Spurstange 14 angeordnet wird. Weiterhin ist es möglich, bei entsprechender Auslegung des Reduktionsgetriebes 35 die Federdruckbremse 39 auch auf der Motorwelle 47 anzuordnen; gegebenenfalls läßt sich eine vergleichbare Bremse auf der Spurstange 14 anordnen. Als Bremseinrichtung kann anstelle der gezeigten Scheibenbremse auch eine Trommelbremse oder jeder andere, geeignete Feststellmechanismus verwendet werden.

## Patentansprüche

1. Elektrohydraulische Stelleinrichtung zum Betätigen der Hinterrad-Lenkung eines Kraftfahrzeuges, dessen beide Hinterräder über zugeordnete Lenkhebel mit einer Spurstange gelenkig verbunden sind, die von einer elektrohydraulischen Servolenkung betätigbar ist, deren hydraulisches Steuerventil als mechanischen Ausgang eine Ritzelwelle aufweist, die mit einer an der Spurstange befestigen Zahnstange in mechanischer Wirkverbindung steht, während das mit einer Pumpe und einem Tank verbundene, hydraulische Steuerventil einen die Lenkbewegung unterstützenden, doppeltwirkenden Stellzylinder steuert und bei welcher Servolenkung der als Lenksäule ausgebildete, mechanische Eingang des hydraulischen Steuerventils über ein Getriebe von einem Elektromotor antreibbar ist, der mit einem elektrischen Steuergerät in Wirkverbindung steht, zu dem Signale eines Lenkbewegungssensors zurückgeführt werden, dadurch gekennzeichnet, daß in der Stelleinrichtung (10) mindestens eine bei Sicherheitsgründen ansprechende, die Spurstange (14) in ihrer zuletzt eingenommenen Stellung festsetzende Blockiereinrichtung (38, 44) angeordnet ist und daß das Getriebe als Reduktionsgetriebe (35) ausgebildet ist.

2. Elektrohydraulische Stelleinrichtung nach Anspruch 1, dadurch gekennzeichnet, daß die Bockiereinrichtung (44) ein hydraulisches Schaltventil (45) aufweist, das in die hydraulischen Arbeitsleitungen (27, 28) zwischen Stellzylinder (29) und Steuerventil (18) geschaltet ist und vom elektrischen Steuergerät (36) ansteuerbar ist.

3. Elektrohydraulische Stelleinrichtung nach Anspruch 1 oder 2, dadurch gekennzeichnet, daß die Blockiereinrichtung (38) eine mechanische Bremseinrichtung (39) aufweist, die mit der Lenksäule (19) oder der Motorwelle (47) in Wirkverbindung steht und vom Steuergerät (36) ansteuerbar ist.

4. Elektrohydraulische Stelleinrichtung nach einem oder mehreren der Ansprüche 1 bis 3, dadurch gekennzeichnet, daß das Reduktionsgetriebe (35) als selbsthemmendes Getriebe ausgebildet ist und eine Blockiereinrichtung bildet.

5. Elektrohydraulische Stelleinrichtung nach einem der Ansprüche 1 - 4, dadurch gekennzeichnet, daß mindestens zwei voneinander unabhängige Blockiereinrichtungen (38, 44) angeordnet sind.

6. Elektrohydraulische Stelleinrichtung nach Anspruch 2, dadurch gekennzeichnet, daß das Schaltventil (45) ein elektromagnetisch betätigbares, federzentriertes Steuerglied aufweist, das im Normalbetrieb die hydraulischen Verbindungen (27, 28) aufsteuert und im Sicherheitsfall den Stellzylinder (29) hydraulisch blockiert.

7. Elektrohydraulische Stelleinrichtung nach Anspruch 3, dadurch gekennzeichnet, daß die Bremseinrichtung eine elektromagnetisch lüftbare Federdruckbremse (39) aufweist, dessen Bremsmechanismus (41) fest auf der Lenksäule (19) oder der Motorwelle (47) angeordnet ist.

8. Elektrohydraulische Stelleinrichtung nach einem der Ansprüche 1 bis 7, dadurch gekennzeichnet, daß der Lenkbewegungssensor ein auf der Lenksäule (19) angeordneter Winkelsensor (40) ist.

9. Elektrohydraulische Stelleinrichtung nach einem oder mehreren der Ansprüche 1 bis 8, dadurch gekennzeichnet, daß die mechanische Bremseinrichtung (39), das Reduktionsgebriebe (35), der Elektromotor (34) und insbesondere die Sensorik (40) in einem Kompaktaggregat (43) zusammengefaßt sind, das auf die Lenksäule (19) der Servolenkeinrichtung (17) aufgesetzt ist.

10. Elektrohydraulische Stelleinrichtung nach einem der Ansprüche 1 - 9, gekennzeichnet durch die Verwendung von Großserienteilen für die Servolenkung (17), den Hydraulikkreis (22) und den Elektromotor (34).

11. Elektrohydraulische Stelleinrichtung nach einem der Ansprüche 1 bis 7, dadurch gekennzeichnet, daß der Lenkbewegungssensor ein auf der Spurstange (14) angeordneter Wegsensor ist.

12. Elektrohydraulische Stelleinrichtung nach Anspruch 8 oder 11, dadurch gekennzeichnet, daß zwei Lenkbewegungssensoren vorgesehen sind, insbesondere ein Winkelsensor und ein Wegsensor.

13. Elektrohydraulische Stelleinrichtung nach einem oder mehreren der Ansprüche 1, 2, 4 bis 6, 8 bis 12, dadurch gekennzeichnet, daß die Blockiereinrichtung eine elektromagnetisch lüftbare, mechanische Bremseinrichtung ist, deren Bremsmechanismus fest auf der Spurstange angeordnet ist.
